# EUROPEAN PATENT SPECIFICATION

(11) **EP 1 724 945 B1**
(45) Date of publication and mention of the grant of the patent: **27.02.2008**
(21) Application number: 05291074.2
(22) Date of filing: 19.05.2005
(51) Int. Cl.: H04B 7/155

(54) **Radio access system with extended service coverage**
Funkzugriffssystem mit erweiterten dienstabdeckung
Systéme d'acces radio avec couverture de service étendue

(43) Date of publication of application: 22.11.2006
(73) Proprietor: Alcatel Lucent, 75008 Paris (FR)
(72) Inventor: Banniza, Thomas-Rolf, 71701 Schwieberdingen (DE); Halbauer, Hardy, 76275 Ettlingen (DE)
(74) Representative: Brose, Gerhard

(56) References cited:
- EP-A- 0 689 303
- EP-A- 1 079 548
- EP-A- 1 107 520
- WO-A-03/055246
- US-A- 4 549 293
- US-A- 5 850 593

## Description

The present invention relates to wireless communication systems, and more particularly, to a system and a method for extending the service coverage of a base station in a radio access system.

In a radio access system, one or more subscribers are connected via a radio link to a base station inside a certain cell service coverage area. Due to physical limitations, e.g. allowed transmission power, radio propagation conditions, landscape topology, the base station cell service coverage area is limited, and thus, the subscribers located outside said coverage area shall be served using another means.

One way of extending the service coverage area of the radio access system is by implementing a mesh of service area cells, in which a plurality of base stations are placed at suitable nearby locations. A problem with this approach is that, for regions of low subscriber density, the need for further base stations and their interconnection with core network is not justified if said base stations are only serving a few new subscribers.

A known solution to this problem is to extend the reach of a radio access base station cell area by providing relay data functionality between subscriber stations and the serving base station so that certain subscriber stations can relay communication data to other subscriber stations which are not in direct reach of the serving base station.

Documents which deal with a mobile communication system in which communication data is transmitted from a base station to a mobile station by means of an intermediate relay mobile station unit are known. US Patent 5,850,593, discloses a mobile communication network in which communication is rendered possible between a base station, with a first station in the service area used as a repeater station, and a second station which may be present near or beyond a boundary of the service area. European Patent Application EP 0 689 303 describes a method for extending the coverage area of a base station by adapting a first mobile station to retransmit data received from a base station or a target second and vice versa. International Patent Application WO 00/54539 describes a method for relaying data between mobile stations in a Time Division Duplex (TDD) or Frequency Division Duplex (FDD) communications system using a so-called ODMA (opportunity division multiple access) mechanism in order to be able to offer a high data rate and a low data rate service inside the base station cell coverage. Also International Patent Application WO 03/055246 deals with a mobile communication network using mobile station relay function and a method for rewarding said relay activities.

EP 1079548 A1, which is considered the closest state of the art, discloses a point-to-multipoint radio communication where a repeater station acts as a subscriber station vis-à-vis the base station and as a base station vis-à-vis further subscriber stations.

It is the object of the present invention to provide a novel method for extending the service coverage of a base station using intermediate stations.

The object is achieved by a method for extending the service coverage of a radio access system according to claim 1 and a hybrid intermediate unit according to claim 7.

According to a preferred embodiment of the invention, the intermediate station, in the following being referenced to as the "hybrid intermediate unit", acts part-time as a subscriber device, for contact with the main base station, and part-time as a base station, serving a plurality of subscriber stations in its environment which can not be reached directly by the main base station. The hybrid intermediate unit achieves this by using the time it is in idle communication with the main base station for scheduling and serving its own depending subscriber stations. When acting as a subscriber station of the main base station, it is said to be acting as a "slave" of the main base station (the master).

Advantageous configurations of the invention emerge from the dependent claims, the following description and the drawings. For example, it is seen advantageous that, by using the proposed method of the invention, subscriber stations which are out of reach of the main base station service coverage area can be further served avoiding the need of an extra main base station. Instead, the hybrid intermediate unit of the invention will cover these extra subscriber stations in a more economical and flexible way. It is also advantageous that the hybrid intermediate unit of the invention belongs to the network operator and not to the subscriber, since this novel network element could be used by said operator for flexible network planning by placing it in needed critical locations. Another advantage can be achieved, for example in situations where a main base station is no longer needed and it is reconfigured as a hybrid intermediate station according to the invention acting as a slave of another main base station. Further, the hybrid intermediate unit of the invention, if at the reach of more than one main base stations, could act as the slave to both main base stations, and could be used for e.g. load balancing, traffic segregation and reliability enhancement.

The method of the invention also covers handover scenarios in which data to be transmitted to the target subscriber station is forwarded to other hybrid intermediate stations in the reach of said moving target subscriber station. Further, the method of the invention avoids interference between the main base station and the hybrid intermediate station.

An embodiment example of the invention is now explained with the aid of Figures 1 to 4.

Fig. 1 illustrates a radio access system comprising a main base station, a plurality of subscriber units and a hybrid intermediate unit according to the invention.

Fig. 2 shows an example of a time-frame structure of a main base station.

Fig. 3 shows a first example of a time-frame structure of a hybrid intermediate unit according to the invention.

Fig. 4 shows a second example of a time-frame structure of a hybrid intermediate unit according to the invention.

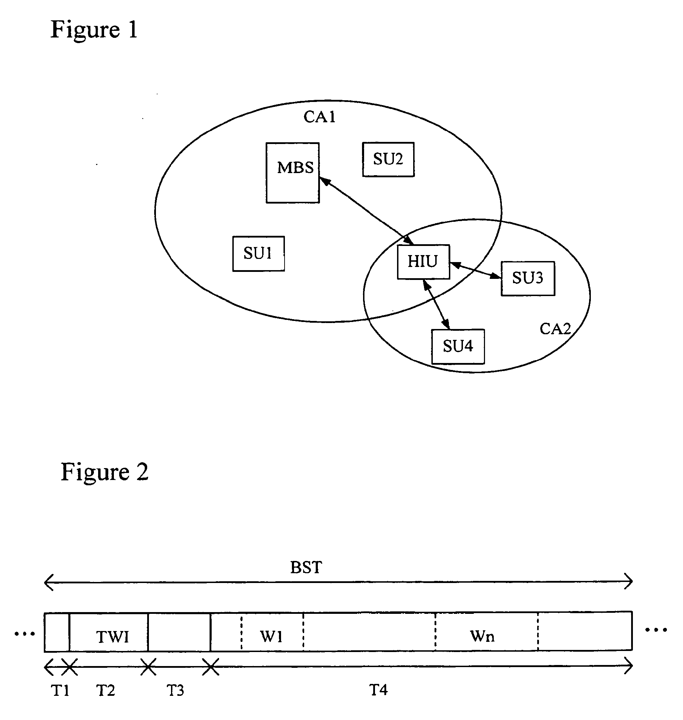

Figure 1 shows a general block diagram of a radio access system comprising a main base station MBS, a plurality of subscriber units SU1 to SU4 and a hybrid intermediate unit HIU according to the invention.

The hybrid intermediate unit HIU can act both as a subscriber unit, for establishing contact and exchange communication data with the main base station MBS, and as a base station for relaying communication data between the main base station MBS and at least another subscriber unit SU3 and/or SU4. The subscriber units SU3 and SU4 relying on the hybrid intermediate unit HIU may be located for example out of reach of the main base station MBS radio service coverage area CA1 but inside the radio service coverage area CA2 of the hybrid intermediate unit, or they may request for a nearby hybrid intermediate unit service if the quality of service they are receiving from the main base station is lower than an accepted level.

The hybrid intermediate unit HIU can act both as a subscriber unit and as base station at the same time. By applying the communication method according to the invention the hybrid intermediate unit HIU provides specific time-frame structures in order to comply with the time frame structures broadcasted by the main base station MBS and at the same time serve its own depending subscriber units SU3 and/or SU4.

In the following, the communication mechanism between the subscriber units and the main base station MBS in a TDD communications system will be explained. In the downlink, e.g. when data has to be transmitted from the base station to one or more subscribers, a resource manager inside the main base station MBS allocates an adequate amount of transmission bandwidth or "time windows" in downstream direction and sends the data to the subscriber units. In the uplink, e.g. when data has to be transmitted from one or more subscribers to the main base station MBS, the resource manager may assign a fixed amount of bandwidth at predefined periods of time to all the subscriber units in the cell or, depending on the number of subscriber units which want to transmit and on the amount of communication data to transmit, it may assign a dynamic bandwidth timetable to said subscriber units. The fixed or dynamic time window timetables are broadcasted by the base station to the subscriber units so that they know when they can send communication data. For downlink and uplink transmission, assignment of time windows and synchronization of subscriber units the main base station MBS uses so-called "time-frame structures", usually of equal size.

Figure 2 schematically shows an example of a time-frame structure BST of a main base station MBS in a TDD communications system. The time-frame is divided in four regions, a first region T1 which provides frame start information, a second region T2 providing downlink and uplink time window assignment information TWI for the subscriber units, a third region T3 for receiving subscriber bandwidth requests, and a fourth region T4 used for actual downlink/uplink communication data transfer.

In the example of Figure 2, the resource manager can assign for example a first time window Wl for downlink transmission and a second time window Wn for uplink transmission to a first subscriber unit SU1 inside the fourth time-frame region T4. It has to be noted that time window assignment information TWI may comprise also assignment information for subsequent main base station time-frames BST, so that the subscriber units can schedule transmit data in advance.

Having knowledge of the main base station time-frame structure BST and the time windows Wn assigned to them, the subscriber units know exactly when they have to receive or transmit data from/to the main base station. The rest of the time, that is, the time in which a subscriber unit does not have to transmit nor to listen to the main base station MBS is the subscriber unit communication "idle time".

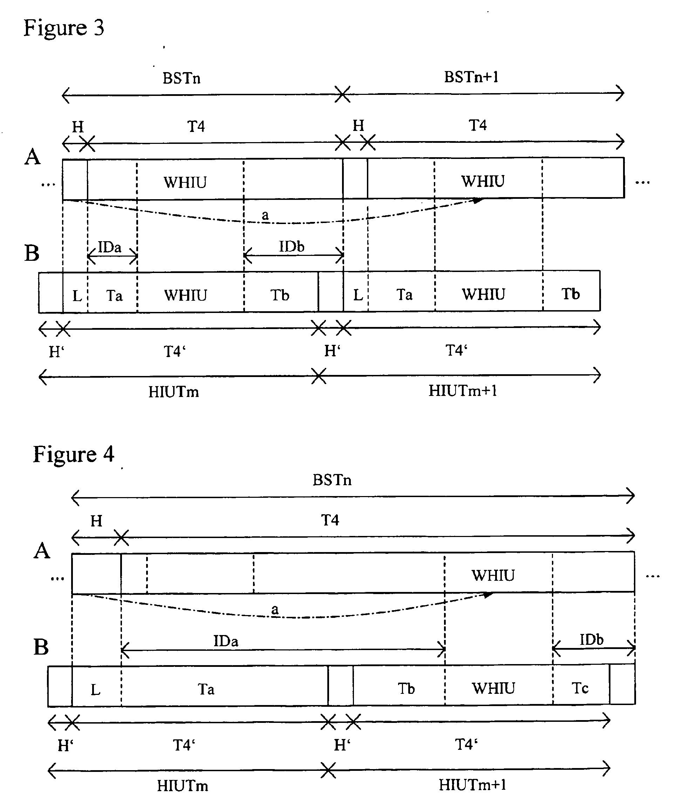

Figure 3 shows a first example of the behavior of a hybrid intermediate unit HIU according to the invention by way of a specific time-frame structure HIUT timing relationship with the main base station time-frame structure BST. Figure 3A shows two subsequent main base station time-frames BSTn and BSTn+1 and Figure 3B shows the timing regions of two subsequent hybrid intermediate unit time-frame structures HIUTm and HIUTm+1. It has to be noted that the length of the regions of the time-frames shown in Figure 3 are not to scale. In reality the uplink/downlink data transfer regions T4, T4' are much larger than the organizational ones H, H'. The organizational regions H, H' represent the first three regions of a time-frame T1, T2 and T3 as shown in Figure 2.

According to the invention, the hybrid intermediate unit HIU makes use of the idle communication time IDa, IDb with the main base station MBS to behave as a relay base station for one or more subscriber units SU3 and/or SU4.

When the main base station MBS provides the time window assignment information TWI in the organizational header H, the hybrid intermediate unit HIU listens to this information (in region L) and obtains information about the time window WHIU (indicated by arrow a in the figure) it has been assigned, for this and/or the next time frame, as a subscriber unit of said main base station MBS, and calculates, for its communication idle time IDa, IDb, its own scheduling for serving its own local subscriber units e.g. SU3 and/or SU4. It provides said subscriber units with own time window assignment information, in organizational regions H', and assigns own communication data transfer time windows Ta, Tb using a specific hybrid intermediate unit time-frame HIUT according to the invention.

As illustrated in Figure 3, in regions H in which the main base station MBS provides organizational data and in time windows WHIU assigned to the hybrid intermediate unit HIU, said hybrid unit acts as a subscriber unit of the main base station. The rest of the time i.e. idle communication time lDa, IDb, may be used by the hybrid intermediate unit HIU to act as a relay base station for scheduling and transfer of data to/from its local subscriber units, e.g. SU3 and/or SU4.

In case of acting as a relay base station, the time window WHIU assigned by the main base station MBS, may be totally or partly used by the hybrid intermediate unit HIU for the transfer of communication data, received from the subscriber units SU3 and/or SU4 or the main base station MBS, to the main base station or to the subscriber units SU3 and/or SU4 respectively.

Figure 4 shows a second example of the behavior of a hybrid intermediate unit HIU according to the invention by way of a specific time-frame structure HIUT timing relationship with the main base station time-frame structure BST. Figure 4A shows one main base station time-frame BSTn and Figure 4B shows the timing regions of two subsequent hybrid intermediate unit time-frame structures HIUTm and HIUTm+1. It has to be noted that the length of the regions of the time-frames shown in Figure 4 are not to scale. In reality the uplink/downlink data transfer regions T4, T4' are much larger. The organizational regions H, H' represent the first three regions of a time-frame T1, T2 and T3 as shown in Figure 2.

Similarly to the scenario shown in Figure 3, when the main base station MBS provides time window assignment information TWI in the organizational header region H, the hybrid intermediate unit HIU listens to this information (in region L) and obtains information about the time window WHIU (indicated by arrow a in the figure) it has been assigned, for this and/or the next time frame, as a subscriber unit of said main base station MBS, and calculates, for its communication idle time IDa, IDb, its own scheduling for serving its own local subscriber units. It provides said subscriber units with own time window assignment information, in organizational regions H', and assigns own communication data transfer time windows Ta, Tb and Tc using a specific hybrid intermediate unit time-frame HIUT according to the invention.

As illustrated in Figure 4, in the region H in which the main base station MBS provides organizational data and in the time window WHIU assigned to the hybrid intermediate unit HIU, said hybrid unit acts as a subscriber unit of the main base station. The rest of the time, idle communication time IDa, IDb, may be used by the hybrid intermediate unit HIU to act as a relay base station for scheduling and transfer of data to/from its local subscriber units.

In the example of Figure 4, the main base station time-frame BSTn is longer, e.g. two or three times, than the time-frame of the hybrid intermediate unit HIUT. Since the main base station assigns the time window WHIU for the hybrid intermediate unit at the end part of the region T4, the hybrid intermediate unit has time enough to use a whole time-frame HIUTm for communication with its own local subscriber units before it has to act as a subscriber station (as a slave), for the main base station.

It has to be noted that in the examples of Figure 3 and 4 according to the invention, the hybrid intermediate unit is assumed to be serving only a few subscribers units which are out of reach of the main base station MBS. The hybrid intermediate unit is not developed to substitute a base station. In cases in which the number of subscribers to be served exceeds the communication capacity of the hybrid subscriber unit, the installation of a new main base station is justified.

The hybrid intermediate unit HIU could also act as a slave, that is, acting as a subscriber unit, of two main base stations provided that the frame start points of said two main base stations are synchronized in a suitable way. For this purpose the hybrid intermediate unit would receive a time window assignment from each main base station and could relay communication data information to/from one or more subscriber units from/to one or the other main base station. The hybrid intermediate subscriber unit could decide for example to establish communication to the main base station presenting better communication quality or with less communication traffic load.

It is also possible to enable a handover mechanism in which a hybrid intermediate unit directly links to another hybrid intermediate unit in order to transfer pending data to be forwarded to a target subscriber station in case said target subscriber station moves out of the reach of the initially serving hybrid intermediate unit. The new hybrid intermediate receiving the pending data will take over the relaying of communication between the target local subscriber station and the main base station.

The hybrid intermediate unit comprises an antenna which covers both its local subscriber units and the main base station. In order to avoid interference, the hybrid intermediate unit can transmit with less power than the main base station, or place a zero in its antenna diagram in the direction of the main base station, or work with a different frequency channel.

Although the invention has been described for a radio communication system with TDD operation mode, the principles of the invention apply also to other radio access technologies which use central resource allocation and inform the subscribers in advance on reception and transmission time windows which they have to use. For example, the invention can also be applied to radio communication systems with FDD operation mode.

It is also understood that the means to carry out the method or certain steps of the method for extending the service coverage of a base station herein described can be implemented in hardware or software form inside the hybrid intermediate unit.

## Claims

1. Method for extending the service coverage of a radio access system comprising a main base station (MBS) serving a plurality of subscriber units (SU1 to SU4) in a service coverage area (CA), in which at least one hybrid intermediate unit (HIU) acts as a subscriber unit of the main base station (MBS) and as a wireless relay station for transmission of information between the main base station (MBS) and two or more subscriber units (SU3 and SU4) located outside the service coverage area (CA) of the main base station, by behaving as a secondary base station serving said two or more subscriber units (SU3 and SU4), **characterized in, that** it further provides scheduling and providing communication, when acting as a secondary base station, with at least two subscriber units (SU3 and SU4) in the idle communication time (IDa, IDb) with the main base station, in which said hybrid intermediate unit (HIU) does not have to listen nor to transmit data to said main base station (MBS).

2. The method for extending the service coverage area of a radio access system of claim 1 **characterized in that** the hybrid intermediate unit (HIU), when acting as a subscriber unit slave of the main base station (MBS), obtains subscriber information from said main base station about at least a time window (WHIU) assignment and communicates with said main base station (MBS) during said time window inside a main base station time-frame structure (BSTn) and, the rest of the time, in the communication idle time (IDa, IDb) with the main base station in which said hybrid intermediate unit (HIU) does not have to listen nor to transmit data to said main base station, it acts as a relay station for transmission of information between the main base station (MBS) and one or more subscriber units (SU3 and/or SU4) located outside the service coverage area (CA) of the main base station and/or as a secondary base station serving two or more subscriber units (SU3 and SU4) located outside the service coverage area (CA) of the main base station.

3. The method for extending the service coverage area of a radio access system of claim 1 **characterized in that** the hybrid intermediate unit (HIU) provides specific time-frame structures (HIUTm) for indicating window times inside said hybrid intermediate unit time-frame structures (HIUTm) assigned for communication with the one or more subscriber units (SU3 and/or SU4).

4. The method for extending the service coverage area of a radio access system of claim 3 **characterized in that** the hybrid intermediate unit (HIU) provides specific time-frame structures (HIUTm) comprising
header time regions (H') for indicating the at least one or more subscriber units (SU3 and/or SU4) with at least frame start and time window assignment information; and
data transfer regions (T4') comprising time windows (L, WHIU) for the reception and transfer of data from/to the main base station (MBS) and time windows (Ta, Tb, Tc) for the reception and/or transfer of data from/to the one or more subscriber units (SU3 and/or SU4).

5. The method for extending the service coverage area of a radio access system of claim 3 **characterized in that** the hybrid intermediate unit (HIU) provides one specific time-frame structure (HIUT) for each main base station time-frame structure (BSTn).

6. The method for extending the service coverage area of a radio access system of claim 3 **characterized in that** the hybrid intermediate unit (HIU) provides at least two specific time-frame structures (HIUT) for each main base station time-frame structure (BSTn).

7. Hybrid intermediate unit (HIU) comprising means for communication with a main base station acting as a subscriber unit in a wireless radio access system, and means for relaying communication data between said main base station (MBS) and at least one subscriber unit (SU3 and/or SU4) located outside the service coverage (CA) of the main base station, and **characterized in that** it further comprises means to schedule and provide communication, when acting as a secondary base station, with at least two subscriber units (SU3 and SU4) in the idle communication time (IDa, IDb) with the main base station, in which said hybrid intermediate unit (HIU) does not have to listen nor to transmit data to said main base station (MBS).

8. The hybrid intermediate unit (HIU) of claim 7 **characterized in that** it comprises means to schedule and provide communication, when acting as a secondary base station, with the at least two subscriber units (SU3 and SU4) and the main base station (MBS) using specific time-frame structures (HIUTm).

9. The hybrid intermediate unit (HIU) of claim 8 **characterized in that** said specific time-frame structures (HIUT) comprise
a header region (H') providing at least frame start and time window assignment information to the at least one subscriber unit (SU3 and/or SU4); and
a data transfer region (T4') comprising time windows (L, WHIU) for the reception and transfer of data from/to the main base station (MBS) and time windows (Ta, Tb, Tc) for the reception and/or transfer of data from/to the at least one subscriber unit (SU3 and/or SU4).

## Patentansprüche

1. Verfahren zur Erweiterung der Dienstabdeckung eines Funkzugriffssystems, umfassend eine Hauptbasisstation (MBS), die eine Vielzahl von Teilnehmereinheiten (SU1 bis SU4) in einem Dienstabdeckungsbereich (CA) bedient, in dem mindestens eine Hybridzwischeneinheit (HIU) als eine Teilnehmereinheit der Hauptbasisstation (MBS) und als eine drahtlose Relaisstation zur Übertragung von Informationen zwischen der Hauptbasisstation (MBS) und zwei oder mehr Teilnehmereinheiten (SU3 und SU4) dient, die sich außerhalb des Dienstabdeckungsbereich (CA) der Hauptbasisstation befinden, durch Verhalten wie eine sekundäre Basisstation, die die zwei oder mehr Teilnehmereinheiten (SU3 und SU4) bedient, **dadurch gekennzeichnet, daß** sie außerdem die Planung bereitstellt und die Kommunikation bereitstellt, wenn sie als eine sekundäre Basisstation dient, mit mindestens zwei Teilnehmereinheiten (SU3 und SU4) in der unbelegten Verbindungszeit (IDa, IDb) mit der Hauptbasisstation, in der die Hybridzwischeneinheit (HIU) Daten nicht hören oder an die Hauptbasisstation (MBS) senden muß.

2. Das Verfahren zur Erweiterung des Dienstabdeckungsbereichs eines Funkzugriffssystems nach Anspruch 1, **dadurch gekennzeichnet, daß** die Hybridzwischeneinheit (HIU), wenn sie als ein Teilnehmereinheitenslave der Hauptbasisstation (MBS) dient, Teilnehmerinformationen von der Hauptbasisstation über mindestens die Zuweisung eines Zeitfensters (WHIU) erhält und mit der Hauptbasisstation (MBS) kommuniziert, während des Zeitfensters innerhalb einer Hauptbasisstations-Zeitrahmenstruktur (BSTn) und des Restes der Zeit, in der kommunikationsfreien Zeit (IDa, IDb) mit der Hauptbasisstation, in der die Hybridzwischeneinheit (HIU) Daten nicht hören muß oder nicht an die Hauptbasisstation senden muß, als eine Relaisstation zur Übertragung von Informationen zwischen der Hauptbasisstation (MBS) und einer oder mehr Teilnehmereinheiten (SU3 und/oder SU4) dient, die sich außerhalb des Dienstabdeckungsbereiahs (CA) der Hauptbasisstation befinden, und/oder als eine sekundäre Basisstation, die zwei oder mehr Teilnehmereinheiten (SU3 und SU4) bedient, die sich außerhalb des Dienstabdeckungsbereichs (CA) der Hauptbasisstation befinden.

3. Das Verfahren zur Erweiterung des Dienstabdeckungsbereichs eines Funkzugriffssystems nach Anspruch 1, **dadurch gekennzeichnet, daß** die Hybridzwischeneinheit (HIU) spezielle Zeitrahmenstrukturen (HIUTm) bereitstellt, um Fensterzeiten innerhalb der Hybridzwischeneinheiten-Zeitrahmenstrukturen (HIUTm) anzugeben, die zur Kommunikation mit einer oder mehr Teilnehmereinheiten (SU3 und/oder SU4) zugewiesen sind.

4. Das Verfahren zur Erweiterung des Dienstabdeckungsbereichs eines Funkzugriffssystems nach Anspruch 3, **dadurch gekennzeichnet, daß** die Hybridzwischeneinheit (HIU) spezielle Zeitrahmenstrukturen (HIUTm) bereitstellt, umfassend
Header-Zeitregionen (H'), um mindestens eine oder mehr Teilnehmereinheiten (SU3 und/oder SU4) mit mindestens Rahmenstart- und Zeitfenster-Zuweisungsinformationen anzuzeigen; und
Datenübertragungsregionen (T4'), die Zeitfenster (L, WHIU) für den Empfang und die Übertragung von Daten von/an die Hauptbasisstation (MBS) und Zeitfenster (Ta, Tb, Tc) für dem Empfang und/oder die Übertragung von Daten von/an eine oder mehr Teilnehmereinheiten (SU3 und/oder SU4) umfassen.

5. Das Verfahren zur Erweiterung des Dienstabdeckungsbereichs eines Funkzugriffssystems nach Anspruch 3, **dadurch gekennzeichnet, daß** die Hybridzwischeneinheit (HIU) eine spezielle Zeitrahmenstruktur (HIUT) für jede Hauptbasisstations-Zeitrahmenstruktur (BSTn) bereitstellt.

6. Das Verfahren zur Erweiterung des Dienstabdeckungsbereichs eines Funkzugriffssystems nach Anspruch 3, **dadurch gekennzeichnet, daß** die Hybridzwischeneinheit (HIU) mindestens zwei spezielle Zeitrahmenstrukturen (HIUT) für jede Hauptbasisstations-Zeitrahmenstruktur (BSTn) bereitstellt.

7. Hybridzwischeneinheit (HIU), umfassend Mittel für die Kommunikation mit einer Hauptbasisstation, die als eine Teilnehmereinheit in einem drahtlosen Funkzugriffssystem dient, und Mittel zur Weitersendung von Kommunikationsdaten zwischen der Hauptbasisstation (MBS) und mindestens einer Teilnehmereinheit (SU3 und/oder SU4), die sich außerhalb der Dienstabdeckung (CA) der Hauptbasisstation befindet, und **dadurch gekennzeichnet, daß** sie außerdem Mittel umfaßt, um die Kommunikation zu planen und bereitzustellen, wenn sie als eine sekundäre Basisstation dient, mit mindestens zwei Teilnehmereinheiten (SU3 und SU4) in der unbelegten Verbindungszeit (IDa, IDb) mit der Hauptbasisstation, in der die Hybridzwischeneinheit (HIU) nicht hören muß oder nicht Daten an die Hauptbasisstation (MBS) senden muß.

8. Die Hybridzwischeneinheit (HIU) nach Anspruch 7, **dadurch gekennzeichnet, daß** sie Mittel umfaßt, um die Kommunikation zu planen und bereitzustellen, wenn sie als eine sekundäre Basisstation dient, mit mindestens zwei Teilnehmereinheiten (SU3 und SU4) und der Hauptbasisstation (MBS) unter Verwendung spezieller Zeitrahmenstrukturen (HIUTm).

9. Die Hybridzwischeneinheit (HIU) nach Anspruch 8, **dadurch gekennzeichnet, daß** die speziellen Zeitrahmenstrukturen (HTUT) umfassen
eine Headerregion (H'), die mindestens Rahmenstart- und Zeitfenster-Zuweisungsinformationen an die mindestens eine Teilnehmereinheit (SU3 und/oder SU4) bereitstellt; und
eine Datenübertragungsregion (T4'), die Zeitfenster (L, WHIU) für den Empfang und die Übertragung von Daten von/an die Hauptbasisstation (MBS) und Zeitfenster (Ta, Tb, Tc) für den Empfang und/oder die Übertragung von Daten von/an mindestens eine Teilnehmereinheit (SU3 und/oder SU4) umfaßt.

## Revendications

1. Procédé permettant d'étendre la couverture du service d'un système d'accès radio comprenant une station de base principale (MBS) servant une pluralité d'unités d'abonnés (SU1 à SU4) dans une zone de couverture du service (CA); dans lequel au moins une unité intermédiaire hybride (HIU) sert d'unité d'abonné de la station de base principale (MBS) et de station relais sans fil pour la transmission d'informations entre le station de base principale (MBS) et au moins deux unités d'abonnés (SU3 et SU4) situées en dehors de la zone de couverture du service (CA) de la station de base principale, en se comportant comme une station de base secondaire servant lesdites au moins deux unités d'abonnés (SU3 et SU4), **caractérisé en ce qu'**elle fournit en outre l'ordonnancement et la fourniture de la communication, quand elle sert de station de base secondaire, avec au moins deux unités d'abonnés (SU3 et SU4) dans le temps de communication au repos (IDa, IDb) avec la station de base principale, dans lequel ladite unité intermédiaire hybride (HIU) ne doit pas écouter, ni transmettre des données à ladite station de base principale (MBS).

2. Procédé permettant d'étendre la zone de couverture du service d'un système d'accès radio selon la revendication 1, **caractérisé en ce que** l'unité intermédiaire hybride (HIU), quand elle sert d'esclave d'unité d'abonné de la station de base principale (MBS), obtient des informations d'abonnés de ladite station de base sur au moins une affectation de la fenêtre de temps (WHIU) et communique avec ladite station de base principale (MBS) pendant ladite fenêtre de temps à l'intérieur d'une structure de trame temporelle de la station de base principale (BSTn) et, le reste du temps, dans le temps de communication au repos (IDa, IDb) avec la station de base principale dans laquelle ladite unité intermédiaire hybride (HIU) ne doit pas écouter, ni transmettre des données à ladite station de base principale, elle sert de station relais pour la transmission d'informations entre la station de base principale (MBS) et une ou plusieurs unités d'abonnés (SU3 et/ou SU4) situées en dehors de la zone de couverture du service (CA) de la station de base principale et/ou de la station de base secondaire servant au moins deux unités d'abonnés (SU3 et SU4) situées en dehors de la zone de couverture du service (CA) de la station de base principale.

3. Procédé permettant d'étendre la zone de couverture du service d'un système d'accès radio selon la revendication 1, **caractérisé en ce que** l'unité intermédiaire hybride (HIU) fournit des structures de trame temporelle spécifiques (HIUTm) permettant d'indiquer des temps de fenêtre à l'intérieur desdites structures de trame temporelle de l'unité intermédiaire hybride (HIUTm) affectée pour la communication avec une ou plusieurs unités d'abonnés (SU3 et/ou SU4).

4. Procédé permettant d'étendre la zone de couverture du service d'un système d'accès radio selon la revendication 3, **caractérisé en ce que** l'unité intermédiaire hybride (HIU) fournit des structures de trame temporelle spécifiques (HIUTm) comprenant
des zones temporelles d'en-tête (H') permettant d'indiquer au moins une ou plusieurs unités d'abonnés (SU3 et/ou SU4) avec au moins des informations d'affectation de début de trame et de fenêtre de temps ; et
des zones de transfert des données (T4') comprenant des fenêtres de temps (L, WHIU) pour la réception et le transfert des données de/à la station de base principale (MBS) et des fenêtres de temps (Ta, Tb, Tc) pour la réception et/ou le transfert des données de la/à une ou plusieurs unités d'abonnés (SU3 et/ou SU4).

5. Procédé permettant d'étendre la zone de couverture du service d'un système d'accès radio selon la revendication 3, **caractérisé en ce que** l'unité intermédiaire hybride (HIU) fournit une structure de trame temporelle spécifique (HIUT) pour chaque structure de trame temporelle de la station de base principale (BSTn).

6. Procédé permettant d'étendre la zone de couverture du service d'un système d'accès radio selon la revendication 3, **caractérisé en ce que** l'unité intermédiaire hybride (HIU) fournit au moins deux structures de trame temporelle spécifiques (HIUT) pour chaque structure de trame temporelle de la station de base principale (BSTn).

7. Unité intermédiaire hybride (HUI) comprenant des moyens pour la communication avec une station de base principale servant d'unité d'abonné dans un système d'accès radio sans fil, et des moyens permettant de relayer des données de communication entre ladite station de base principale (MBS) et au moins une unité d'abonné (SU3 et/ou SU4) située en dehors de la couverture du service (CA) de la station de base principale, et **caractérisée en ce qu'**elle comprend en outre des moyens pour ordonnancer et fournir la communication, quand elle sert de station de base secondaire, avec au moins deux unités d'abonnés (SU3 et SU4) dans le temps de communication au repos (IDa, IDb) avec la station de base principale, dans laquelle ladite unité intermédiaire hybride (HIU) ne doit pas écouter, ni transmettre des données à ladite station de base principale (MBS).

8. Unité intermédiaire hybride (HIU) selon la revendication 7 **caractérisée en ce qu'**elle comprend des moyens pour ordonnancer et fournir la communication, quand elle sert de station de base secondaire, avec les au moins deux unités d'abonnés (SU3 et SU4) et la station de base principale (MBS) à l'aide des structures de trame temporelle spécifiques (HIUTm).

9. Unité intermédiaire hybride (HIU) selon la revendication 8, **caractérisée en ce que** lesdites structures de trame temporelle spécifiques (HIUT) comprennent
une zone d'en-tête (H') fournissant au moins des informations d'affectation de début de trame et de fenêtre de temps à la au moins une unité d'abonné (SU3 et/ou SU4) ; et
une zone de transfert des données (T4') comprenant des fenêtres de temps (L, WHIU) pour la réception et le transfert des données de la/à la station de base principale (MBS) et des fenêtres de temps (Ta, Tb, Tc) pour la réception et/ou le transfert des données de/à la au moins une unité d'abonné (SU3 et/ou SU4).
